# EUROPEAN PATENT SPECIFICATION

(11) **EP 1 689 945 B1**
(45) Date of publication and mention of the grant of the patent: **24.09.2008**
(21) Application number: 04762871.4
(22) Date of filing: 23.09.2004
(51) Int. Cl.: E04B 1/76, B32B 7/02

(54) **AN ELECTRICALLY CONDUCTING BUILDING ELEMENT, A BUILDING, AND A METHOD OF ERECTING THE BUILDING**
ELEKTRISCH LEITENDES BAUELEMENT, GEBÄUDE UND VERFAHREN ZUM ERRICHTEN DES GEBÄUDES
ELEMENT DE CONSTRUCTION ELECTROCONDUCTEUR, BATIMENT ET PROCEDE POUR ERIGER UN BATIMENT

(30) Priority: 24.09.2003 US 505057 P
(43) Date of publication of application: 16.08.2006
(73) Proprietor: Infinity Systems AG, 8008 Zürich (CH)
(72) Inventor: REIPUR, John, DK-2930 Klampenborg (DK)
(74) Representative: Inspicos A/S
(86) International application number: PCT/DK2004/000651
(87) International publication number: WO 2005/028771

(56) References cited:
- FR-A- 2 581 167
- US-A1- 2003 079 428
- PATENT ABSTRACTS OF JAPAN vol. 2002, no. 11, 6 November 2002 (2002-11-06) & JP 2002 201729 A (MATSUSHITA ELECTRIC IND CO LTD), 19 July 2002 (2002-07-19) cited in the application

## Description

The present invention relates to a novel manner of preparing building blocks for houses and building the houses. Especially the electrical properties are novel and highly desirable.

Building blocks and building structures have been the focus of attention throughout all times. The energy expenditure relating to houses receives still more focus, and the present invention has brought about a technology which vastly reduces the amount of energy required to heat/chill a house in most parts of the world.

Building blocks and buildings are e.g. described in: FR-A-2,581,167 JP 2000-297487, JP 2003-41676, JP 9-60143, JP 2002-201729, JP 9-60145, JP 2000-179065, JP 10-205242, US-A-4,145,852, US-A-5,433,049, US-A-5,146,721, US-A-4,527,373, and US 2003/0079428.

In a first aspect, the invention relates to a building element comprising:
- a first and a second, at least substantially parallel, thermally conducting sheets, plates, or layers,
- at least one electrically conductive layer, plate, or sheet positioned between the first and second layers/sheets, and
- a first thermally insulating layer, plate, or sheet, positioned between the first sheet/layer/plate and the electrically conducting sheet(s)/layer(s)/plate(s), and
- a second thermally insulating layer, plate, or sheet, positioned between the second sheet/layer/plate and the electrically conducting sheets(s)/layer(s).

The overall functionality of a thermally conducting sheet/plate/layer is to transport heat/temperature in order to have as dose as reasonably possible the same temperature over the full surface thereof. Depending on the actual temperature and temperature drop desired over parts of the sheet/plate/layer, different thermal conductivity coefficients are required. This will be logical to the skilled person.

In the present context, a thermally and/or electrically conducting sheet/plate/layer needs not be self-supporting, whereby the thickness thereof may be rather small, depending on the amount of heat and/or power which is desired moved and the strength required of the material taking into account the strength of the remainder of the building element.

Also, the material(s) constituting or forming part of the sheet/plate/layer may be selected on the basis of its/their electrical conduction, strength, shape stability, wear resistance, resistance to the presence of water/steam, and/or looks (as it may constitute the visible part of a wall). The electrically conductive layer may be made of, typically, any metal or alloy, such as copper, silver, gold, aluminium, bras, or steel.

It is clear that the higher the conductivity, the higher the functionality of the present invention.

Therefore, in this context, no difference is made between "sheet", "plate", "layer" or other terms relating to the thickness of the material in that this will differ with different materials and different uses (warm or cold climate, indoor, outdoor, the amount of power to transfer, how rigid/strong/stable the remainder of the building element is).

Naturally, the individual sheets of conductive material may be made of different materials or compositions just as well as the sheets of thermally insulating material may be made of different materials and compositions.

Presently, any thermally insulating material may be used. Depending on the functionality and strength of the sheets etc. of thermally/electrically conducting material, this thermally insulating material may be desired to be stronger or may be allowed to be weaker, and the electrical conductivity/insulating properties of the material may be relevant or not. Standard insulating materials may be Rockwool®, bricks, clay, feathers, wood, plaster, gypsum, concrete, different types of rock, glass, foams, foamed materials, or other insulating materials usually used in buildings.

Normally, the first, second, and third conducting sheets as well as the first and second thermally insulating sheets will be co-extending and parallel in order to form a, normally rectangular, building block which may have any desired size or dimension.

A specific embodiment is one wherein, along a predetermined direction in a plane of the first sheet/layer/plate, the first and second sheets/layers/plates extend farther than the third conducting layer(s)/plate(s)/sheet(s).

This direction may be a specific direction of the building element, when it is in use in a building, such as horizontal or vertical, or may be a specific direction relating to how and where the building element is attached to e.g. a skeleton structure. Alternatively, the first and second sheets actually may extend farther in that plane in all directions.

However, it will normally be desired that the electrically conducting layer covers as much as possible of the area of the first sheet, in the plane, in that it will then be possible to actually access the electrically conducting sheet, and thereby the power/information, at any desired position of the surface of the first or second thermally conducting sheet. This will be described further below.

Therefore, it is preferred that the area, in the plane, covered by the electrically conducting sheet is at least 75%, such as at least 80%, preferably at least 85%, such as at least 90% of the area covered by the first thermally conductive sheet in the plane.

Also or alternatively, it is preferred that, in the plane, the electrically conducting sheet extends, in the direction but preferably in all directions in the plane, at least 75%, such as at least 80%, preferably at least 85%, such as at least 90% of the distance extended by the first thermally conductive sheet, in the plane. However, it is also desired that the electrically conducting sheet, in the direction but preferably in all directions in the plane, extends no more than 99%, such as no more than 98%, such as no more than 95% of the distance extended by the first thermally conductive sheet in the plane and in the pertaining direction.

In order to facilitate engagement with the electrically conductive sheet(s)/layer(s)/plate(s), these are preferably provided in predetermined distance(s) from an outer surface of the first and/or second layers/sheets/plates.

In the above aspect, the building element may further comprise openings in the first and second sheets/plates/layers, such as for venting the interior of the building element or for providing venting across the building element.

It should be noted that, in fact, the present building element may be provided in multiple parts, such as two parts, which, when assembled, form the building element. As will become clear further below, the fact that the first and second thermally conducting sheets may extend farther in the plane than other sheets in the element may make it advantageous to provide the building element in two parts (divided along the plane and at a position between the first and second thermally conducting sheets) so as to assemble the building element while attaching it to e.g. a skeleton structure.

A second aspect of the invention relates to a building or building envelope comprising an at least substantially rigid skeleton structure and a plurality of building elements supported by the skeleton structure, each building element comprising:
- a first and a second, at least substantially parallel, thermally conducting sheets, plates, or layers,
- at least one electrically conductive layer, plate, or sheet positioned between the first and second layers/sheets,
- a first thermally insulating layer, plate, or sheet, positioned between the first sheet/layer/plate and the electrically conducting sheet(s)/layer(s)/plate(s), and
- a second thermally insulating layer, plate, or sheet, positioned between the second sheet/layer/plate and the electrically conducting sheets(s)/layer(s)/plate(s),
the building further comprising means for providing power to the electrically conducting plate(s)/layer(s)/sheet(s). In the context of the second aspect, the skeleton structure will normally be a structure where the skeleton structure comprises an outer skeleton structure, defining an outer contour of the building, and an inner skeleton structure defining an inner contour fully enclosed by the outer contour. This would normally be the case for a skeleton structure defining the outer walls of a building. However, it should be noted that the skeleton structure and the building elements may just as well be used for inner walls (walls having a room at either side thereof) of the building.

It should be noted that the full surface (except for e.g. windows and doors which may, in fact, be building elements, but that this is in no way required. Also, these elements may be covered both internally in the house and outside with covers in order to change the appearance or physical characteristics (such as water resistance etc.) thereof.

In a preferred embodiment, the rigid structures each comprises a plurality of rigid elements positioned in pairs of one element from the inner structure and one element from the outer structure, the elements of each pair being at least substantially parallel, and wherein the building elements are provided between a number of such pairs. Naturally, the above building element will be suited for this aspect.

Naturally, not all walls/ceilings/floors of the building need be of the above type.

In this and the following aspects, the invention will be described in relation to a building (envelope) having thermally conducting sheets/plates/layers both at internal sides thereof and at outer sides thereof. However, it may be desired to actually only provide these sheets etc. at one of the internal sides or the outer sides for internal temperature control or for receiving and storing heat/cold from the outside of the house, respectively. In that situation, additional heat/cold providing may be required or standard radiators/convectors may be required for actually providing the desired temperature in the building.

Thus, a building having a normal outer brick/wood wall may have an inner wall having the thermally conducting sheets and inner skeleton structure, whereby the standard heating of a house is replaced, but where the heat to be provided (hot water, gas burner, oil burner, etc) may still be required. Alternatively, a house having a standard inner side having e.g. standard plumbing and radiators/convectors may be provided with an outer part having the thermally conducting sheets and an outer skeleton structure providing e.g. heat/cold gas/water to the plumbing.

It should be noted that exactly how large a thermal conduction must be provided by the term "thermally connected" will depend on the materials used for the structure and the elements and will depend on the level of ambition. A high thermal conductivity between e.g. two metallic elements (a sheet and a rigid element) may be obtained by welding/soldering the elements to each other. Less ambitious thermal connection may be provided by riveting the elements together or using screws or the like where the thermal connection is not along a full length of the intersection between the elements but more at well-defined points. This last connection may then be improved by providing in the intersection, a thermally conducting paste.

For a number of reasons, it is preferred that the building further comprises means for electrically connecting the first and/or second plates/layers/sheets to ground or zero.

As mentioned above, preferably, along a predetermined direction in a plane of the first sheet/layer/plate, the first and second sheets/layers/plates extend farther than the electrically conducting layer(s)/sheet(s). The above comments are equally valid here.

In one embodiment, the building further comprises means for accessing, at an outer surface of a building element, the power provided to the conducting plate(s)/layer(s)/sheet(s) of the building element, the accessing means comprising a screw/nail/rivet for each of the plate(s)/layer(s)/sheet(s) carrying the power, the screw(s)/nail(s)/rivet(s) providing the power carried to or at the surface of the building element.

These screws extend from the plate to the surface so that the power is available at that surface for an electrical socket or directly by e.g. a lamp or the like.

In this manner, sockets, connectors or the like may be provided exactly where desired as opposed to today, where a large quantity of electrical cords are visible in houses.

In another embodiment, the building further comprises means for communicating via electrically conducting plate(s)/sheets(s)/layer(s) of a building element by providing information to the electrically conducting plate(s)/sheets(s)/layer(s) of the building element and means for receiving, from the electrically conducting plate(s)/sheets(s)/layer(s) of the building element, the information provided.

Naturally, this communication may be provided over the same sheets as the power or over separate plates provided in the building elements in the same manner as the other sheets.

These communicating elements may be any elements communicating now or in the future:
- audio/video from stereos, surround sound, intercoms, mobile telephones, video/DVD,
- computer network, computers, network interface cards, switches, etc.
- control of internal units, such as stows, freezers, temperature sensors, burglar alarms, and
- the pumps or the like providing/controlling/sensing the flow/pressure/temperature in the rigid elements of the third aspect of the invention.

Preferably, then, the building further comprises means for interconnecting electrically conducting plates/sheets/layers of adjacent building elements. This may also be across e.g. any elements (such as the rigid elements of the third aspect) used for interconnecting or holding the building elements.

These interconnecting means may be used not only for interconnecting the sheets in order to provide power or any information transported by the sheet(s) of one building element to a next one. Additional functionality may be desired, such as control of the information, alteration or control of the power or the like.

Especially, the interconnection means may comprise at least one of:
■ means for transforming a first voltage and/or current carried by one or more of the electrically conducting layers/sheets/plates of one building element into a second voltage and/or current to be carried by one or more of the electrically conducting layers/sheets/plates of an adjacent building element,
■ electrical conductors transferring a voltage and/or current carried by one or more of the electrically conducting layers/sheets/plates of one building element to one or more of the electrically conducting layers/sheets/plates of an adjacent building element,
■ means for galvanically separating the electrically conducting layers/sheets/plates of the two building elements,
■ means for transferring information carried by one or more of the electrically conducting layers/sheets/plates of one building element to one or more of the electrically conducting layers/sheets/plates of an adjacent building element, and
■ fuse means for removing a connection between the electrically conducting layers/sheets/plates of the adjacent building elements when a predetermined situation (current above a threshold voltage drop or the like) takes place.

A third aspect of the invention relates to an interconnection adapted to be used in the building according to the fourth aspect, the interconnection comprising at least one of:
■ means for transforming a first voltage and/or current carried by one or more of the electrically conducting layers/sheets/plates of one building element into a second voltage and/or current to be carried by one or more of the electrically conducting layers/sheets/plates of an adjacent building element,
■ electrical conductors transferring a voltage and/or current carried by one or more of the electrically conducting layers/sheets/plates of one building element to one or more of the electrically conducting layers/sheets/plates of an adjacent building element,
■ means for galvanically separating the electrically conducting layers/sheets/plates of the two building elements,
■ means for transferring information carried by one or more of the electrically conducting layers/sheets/plates of one building element to one or more of the electrically conducting layers/sheets/plates of an adjacent building element, and
■ fuse means for removing a connection between the electrically conducting layers/sheets/plates of the adjacent building elements when a predetermined situation (current above a threshold voltage drop or the like) takes place.

Similarly to the first aspect, a fourth aspect relates to a method of providing a building element, the method comprising:
- providing a first and a second, at least substantially parallel, thermally conducting sheets, plates, or layers,
- providing at least one electrically conductive layer, plate, or sheet between the first and second layers/sheets,
- providing a first thermally insulating layer, plate, or sheet between the first sheet/layer/plate and the electrically conducting sheet(s)/layer(s)/plate(s), and
- providing a second thermally insulating layer, plate, or sheet between the second sheet/layer/plate and the electrically conducting sheets(s)/layer(s).

Again, all comments to materials, structure etc. relating to the first aspect are equally relevant to this fourth aspect.

In this aspect, preferably, the step of providing the at least three sheets/plates/layers comprises providing the sheets/plates/layers so that, along a predetermined direction in a plane of the first sheet/layer/plate, the first and second sheets/layers/plates extend farther than the electrically conducting layer(s)/sheet(s).

Also, preferably, the method further comprises the step of providing the electrically conductive sheet(s)/layer(s)/plate(s) in predetermined distance(s) from an outer surface of the first and/or second layers/sheets/plates.

Finally, in the fourth aspect, the method may further comprise the step of providing openings in the first and second sheets/plates/layers.

Similarly to the second aspect, a fifth aspect of the invention relates to a method of providing a building, the method comprising:
- providing an at least substantially rigid skeleton structure,
- providing a plurality of building elements supported by the skeleton structure, each building element comprising:
   - a first and a second, at least substantially parallel, thermally conducting sheets, plates, or layers,
   - at least one electrically conductive layer, plate, or sheet positioned between the first and second layers/sheets,
   - a first thermally insulating layer, plate, or sheet, positioned between the first sheet/layer/plate and the electrically conducting sheet(s)/layer(s)/plate(s),
   - a second thermally insulating layer, plate, or sheet, positioned between the second sheet/layer/plate and the electrically conducting sheets(s)/layer(s)/plate(s), and
- providing power to the electrically conducting plate(s)/layer(s)/sheet(s).

All comments made in relation to the second aspect are equally valid for this fifth aspect.

Preferably, the method further comprises electrically connecting the first and/or second plates/layers/sheets to ground or zero.

As indicated above, the step of providing the building elements preferably comprises providing building elements where, along a predetermined direction in a plane of the first sheet/layer/plate, the first and second sheets/layers/plates extend farther than the electrically conducting layer(s)/sheet(s).

Also, preferably the method comprises the step of accessing, at an outer surface of a building element, the power provided to the conducting plate(s)/layer(s)/sheet(s) of the building element, the accessing step comprising screwing a screw/nail/rivet into each of the plate(s)/layer(s)/sheet(s) carrying the power and providing, via the screws/rivets/nails, the power carried to or at the surface of the building element.

A number of other manners exist of accessing this power, but this manner requires no special tools at all.

An interesting embodiment is one further comprising the step of two or more apparatus communicating via electrically conducting plate(s)/sheets(s)/layer(s) of a building element, the communicating step comprises one apparatus providing information to the electrically conducting plate(s)/sheets(s)/layer(s) of the building element and another apparatus receiving, from the electrically conducting plate(s)/sheets(s)/layer(s) of the building element, the information provided.

Apparatus of this type are described in relation to the second aspect. The actual communication protocol may be a rather simple protocol, such as token ring or protocols used for wireless communication.

Preferably, the method further comprises the step of interconnecting electrically conducting plates/sheets/layers/plates of adjacent building elements in order to provide power and communication to many or all building elements. This interconnecting step may comprise at least one of:
■ transforming a first voltage and/or current carried by one or more of the electrically conducting layers/sheets/plates of one building element into a second voltage and/or current to be carried by one or more of the electrically conducting layers/sheets/plates of an adjacent building element,
■ transferring a voltage and/or current carried by one or more of the electrically conducting layers/sheets/plates of one building element to one or more of the electrically conducting layers/sheets/plates of an adjacent building element,
■ galvanically separating the electrically conducting layers/sheets/plates of the two building elements,
■ transferring information carried by one or more of the electrically conducting layers/sheets/plates of one building element to one or more of the electrically conducting layers/sheets/plates of an adjacent building element, and
■ removing a connection between the electrically conducting layers/sheets/plates of the adjacent building elements when a predetermined situation takes place.

In the following, a preferred embodiment of the invention will be described with reference to the drawing, wherein:
Fig. 1 illustrates a basic building element for a wall, ceiling, roof, or a floor,
Fig. 2 illustrates the basic building element of Fig. 1 positioned between the structural elements forming the skeleton of a house,
Fig. 3 illustrates the electrical contacting of electric conductors within the basic building element,
Fig. 4 illustrates a preferred embodiment of a screw used for providing electrical contact,
Fig. 5 illustrates interconnection of electric conductors across structural elements, and

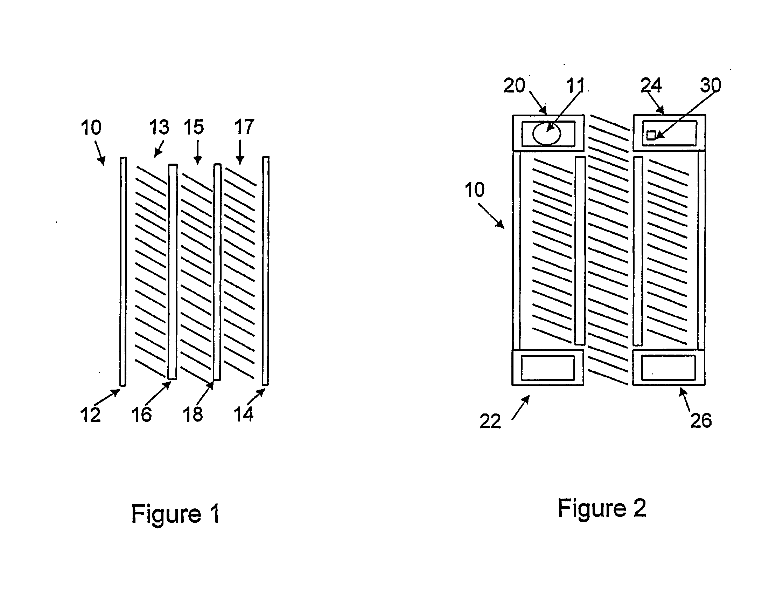

In Fig. 1, the basic building element 10 comprises two outer metallic (or other materials with high thermal conductivity) surfaces or plates 12 and 14, two inner metallic (or other materials with high thermal and/or electric conductivity) surfaces or plates 16 and 18, and three layers, 13, 15, and 17, of a thermally insulating material, such as Rockwool®.

This element 10 has been manufactured by simply sandwiching the elements and attaching these to each other by e.g. gluing, heating, welding, soldering, sintering, the use of force, the use of elements which are sticky in themselves, the forcing of material into openings/pockets of another element, or the like.

The thermal function of this element is that when a temperature difference exists over the element (between plates 12 and 14), the plates 12 and 14 will ensure that the same temperatures are present over the full surfaces of the plates 12 and 14. The plates 16 and 18 will ensure that the temperature differences inside the element 10 (between plates 12 and 16, 16 and 18, and 18 and 14) will be the same all over the surfaces thereof.

Further below, a further use of the plates 16 and 18 will be described.

Fig. 2 illustrates what the basic element 10 may be used for in a building.

In fig. 2, the basic element 10 has been positioned between two pairs of hollow structural elements, 20, 22, 24, and 26. These structural elements are made of a thermally conducting material, such as a metal (such as Aluminium), whereby the elements 20 and 22 will be heated/chilled by the temperature of the plate 12, and the elements 24 and 26 will be heated/chilled by the temperature of the plate 14.

It is understood that the building element 10 may, in fact, be provided as two parts which are provided from each side of the structural elements (see Fig. 2) and which, when the two parts are assembled, form the building element. In this manner, the structure of the house may be erected and the building elements still extend further (e.g. in the horizontal direction) than the actual distance between the elements 20 and 22 for ensuring an overlap prior to and while attaching e.g. the plate 12 to the elements 20 and 22.

Inside these structural elements (commonly denoted 20), air or liquid may be transported in order to receive and transport the high/low temperature - or to provide a lower or higher temperature to the structural element 20 and further to the related plate(s).

Alternatively, the structural elements 20 may themselves (such as if they were solid) transport the energy.

Thus, it is clear that the outer plates of e.g. a house may heat the structural elements during the day, which high temperature may be "stored" and delivered on the inner plates during the night. Conversely, a low temperature may be "stored" during the night and delivered to the inner plates during the day.

The present figures illustrate the use of two plates 16 and 18, but any number of plates may be used, as will be described further below, for different types of electricity (220V power, 380V power, low voltage power, communication, shielding of individual plates, used e.g. for communication, etc. etc.)

From Fig. 2, it is seen that the plates 16 and 18 do not extend as far in the direction of the elements 20 as the plates 12 and 14, which are attached to or at least touch the elements 20. Thus, the plates 16 and 18 actually "float" in the element 10 so that they have no electrical connection to any of the plates 12 and 14 (which are grounded in order to ensure the safety of the habitants etc. of the house). Also, the plates 16 and 18 do not touch the elements 20.

An additional plate (not illustrated) may be used - such as between the plates 12 and 16, if the plate 12 was e.g. a floor surface, which plate is powered by the plates 16 and 18. The dimensions of that plate would then determine e.g. a heating of that plate, whereby an element 10 with built-in electrical heating is provided.

This additional plate may have any shape, such as a shape corresponding to that of the plates 12 and 14 - or be an element having e.g. a meandering pattern of an electrical heating element. Any known structure of an electrical heating element may be used.

Power carried by the plates 16 and 18 may be accessed at any position of the element 10 where the plates 16 and 18 extend (which is normally the full surface of the plates 12 and 14 except for a small area along the extreme portions thereof). Access to the power may be obtained in a number of ways, but the preferred manner is the use of screws for which suitable holes have been made in the plates 12, 14, 16, 18.

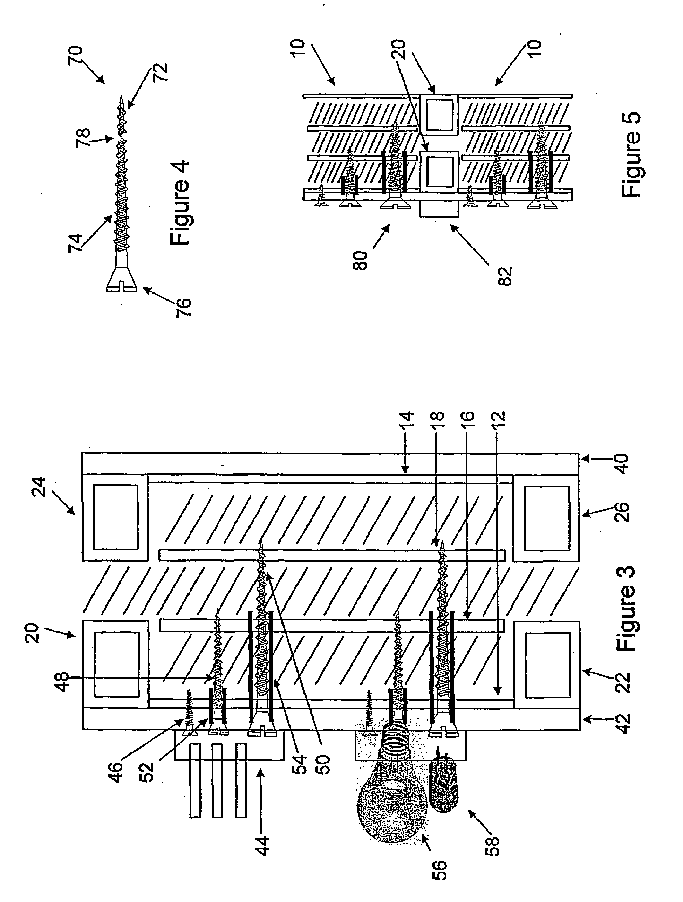

In fact, as may be seen from Fig. 3, an electrical socket 44 is positioned on a plate 42 positioned on the plate 12, such as for cosmetic reasons, and in order to access the power, three screws 46, 48, and 50 have been provided:
- the screw 46 contacting the plate 12 in order to provide ground to the socket,
- the screw 48 contacting the plate 16, and
- the screw 50 contacting the plate 18.

In this figure, a plate 40 has been provided on the other surface of the element, also for e.g. cosmetic purposes.

The plug-receiving parts of the socket then contact the heads of the screws 48 and 50 (and maybe also the screw 46) in order to provide power to a plug inserted there into.

In order to prevent shortcutting between the plates 12, 16, and 18, the holes drilled for the screws 48 and 50 are large enough for shortcutting preventing means (tubes) 52 and 54 to be inserted in order to e.g. prevent contact between the screw 50 and the plates 12 and 16.

Fig. 3 also illustrates two light bulbs 56 and 58 powered by the power transported by the plates 16 and 18.

Naturally, also the sensors 30 and the valves 34 of the elements 20 may be powered by the power transported by the plates 16 and 18.

A preferred feature of the screws is the fact that, when the plates 12, 16, and 18 are made of e.g. aluminium, copper, gold, or silver, the tips of the screws are either made of the same material or coated therewith. In that situation, the material on the tip of the screw will self weld to the plate due to the contact there between during the screwing insertion. In that manner, optimal contact is obtained.

Fig. 4 illustrates a screw 70 of the above type having a tip portion 72 and a base portion 74 having a head portion 76 for engaging e.g. a screw driver. The tip portion 72 and the base portion 74 are separated by a narrowed section 78 where the screw 70 is weakened compared to its the parts of the parts 72 and 74 immediately surrounding the section 78.

The section 78 is provided so narrow/weak that it will break when attempting to unscrew the screw 70 having welded to a plate in the element 10. Thus, the strength of the section 78, when attempting to rotate the screw 70, should be lower than the strength of the welding to the plate.

However, naturally, the strength of the section 78 should be strong enough to actually drive the tip part 72 into the plate in order to weld and obtain the connection. Naturally, a hole may have been made in advance in the plate in order to reduce the force required to drive the tip part 72 into the plate.

The position of the section 78 of the screw 70 should be selected so that the broken off tip part 72 does not extend to any adjacent plates 16 or 14, for example, in order to prevent any future undesired short cuttings either by the remaining tip part 72 - or by any loose tip parts (if the welding was not used) remaining in the element 10.

The distance in which the tip part 72 extends through the plate should be controlled, such as by controlling the diameter of a hole made in advance of inserting the tip part 72 in the hole.

Thus, the position of the section 78 is easily determined - also taking into account the fact that, in the future, a screw may be introduced in an adjacent plate - and the fact that the plates may displace slightly over the years. These distances will depend on the actual building of the element 10; the number of plates therein, the distances there between, etc.

The screw 70 may be provided in many manners:
- the part 78 may be made weak by removing part of the material of the screw 70,
- the part 78 may be made weak by providing it in a material having the desired strength,
- the part 78 may be made weak by making the screw 70 hollow at that position,
- the part 78 may be made weak by replacing part of the material at that position with a weaker material,
- the part 74 may be made of an electrically insulating material (so as to avoid the elements 50, 52),
- the part 74 may be coated with an electrically insulating material (so as to avoid the elements 50, 52),
- the part 74 is not required to have a thread at all, and
- all of the part 72 may be "weak" in that it is not important where the break is, as long as it is no farther away from the plate in which it is inserted than the maximum desired length.

This screw and the power aspect is described in more detail in Applicants co-pending PCT application filed on even date and titled "AN ELECTRICALLY CONDUCTING ELEMENT FOR USE IN PROVIDING POWER TO/FROM A BUILDING ELEMENT".

In another embodiment, the materials of the plate and the tip part 72 may not weld merely due to the contact but may be adapted to weld, when e.g. an ultrasound welder is engaged with the head portion 76 of the screw 70.

In addition to transporting power, the plates 16 and 18 may also carry communication between the sensors 30, the valves 34, any other communicating elements accessing the plates (radio, computer, TV, mobile telephony, networking, video, DVD, telephones, etc. etc) and the central unit 32. Optionally or additionally, further plates may be provided inside the element 10 for that purpose.

Naturally, in addition to feeding power to a TV, telephone, video, computer or the like, the communication there from/to may be provided over the plates. The electrical connecting of the communication may be as that described in relation to the screw 70.

An interesting feature is the fact that, now, communication and power is always present near the appliance or apparatus, so that much less cables are required.

The actual communication protocol provided on the plates may be any type of suitable communication keeping in mind that a number of communicating elements will communicate on the same conducting medium. Thus, Ethernet or Token Ring communication or communication normally used in wireless communication may be used.

Naturally, the individual elements 10 or plates 12, 14, 16, 18 should be interconnected across the elements 20. This may be obtained using coupling elements 80 as illustrated in Fig. 5, which coupling elements interconnects corresponding pairs of the plates 12, 14, 16, and 18 in the two adjacent elements 10 across the element 20.

These coupling elements 80 may have more functionality than merely transporting power, ground connection, or communication. These coupling elements 80 may have a built-in functionality 82, such as a fuse, a circuit breaker/switch, a power/voltage transformer, communication elements, such as a switch, a router, a hub or the like, or other electronics desirably inserted between the power consumers/communicating elements provided in or at the individual elements 10.

In one embodiment, the elements 80 are provided inside the house 23 at floor level in order to be covered by the skirting board/baseboard normally provided in houses at the interception between the walls and the floor. In this manner, they are easily accessible, replaceable, and still covered and out of sight.

## Claims

1. A building element comprising:
- a first and a second, at least substantially parallel, thermally conducting sheets, plates, or layers,
- at least one electrically conductive layer, plate, or sheet positioned between the first and second layers/sheets, and
- a first thermally insulating layer, plate, or sheet, positioned between the first sheet/layer/plate and the electrically conducting sheet(s)/layer(s)/plate(s), and
- a second thermally insulating layer, plate, or sheet, positioned between the second sheet/layer/plate and the electrically conducting sheets(s)/layer(s).

2. A building element according to claim 1, wherein, along a predetermined direction in a plane of the first sheet/layer/plate, the first and second sheets/layers/plates extend farther than the electrically conducting layer(s)/sheet(s).

3. A building element according to claim 2, wherein the electrically conductive sheet(s)/layer(s)/plate(s) are provided in predetermined distance(s) from an outer surface of the first and/or second layers/sheets/plates.

4. A building element according to any of the preceding claims, further comprising openings in the first and second sheets/plates/layers.

5. A building comprising an at least substantially rigid skeleton structure and a plurality of building elements supported by the skeleton structure, each building element comprising:
- a first and a second, at least substantially parallel, thermally conducting sheets, plates, or layers,
- at least one electrically conductive layer, plate, or sheet positioned between the first and second layers/sheets,
- a first thermally insulating layer, plate, or sheet, positioned between the first sheet/layer/plate and the electrically conducting sheet(s)/layer(s)/plate(s), and
- a second thermally insulating layer, plate, or sheet, positioned between the second sheet/layer/plate and the electrically conducting sheets(s)/layer(s)/plate(s),
the building further comprising means for providing power to the electrically conducting plate(s)/layer(s)/sheet(s).

6. A building according to claim 5, further comprising means for electrically connecting the first and/or second plates/layers/sheets to ground or zero.

7. A building according to claim 5 or 6, wherein, along a predetermined direction in a plane of the first sheet/layer/plate, the first and second sheets/layers/plates extend farther than the electrically conducting layer(s)/sheet(s).

8. A building according to claim 5, further comprising means for accessing, at an outer surface of a building element, the power provided to the conducting plate(s)/layer(s)/sheet(s) of the building element, the accessing means comprising a screw for each of the plate(s)/layer(s)/sheet(s) carrying the power, the screw(s) providing the power carried to or at the surface of the building element.

9. A building element according to any of claims 5-8, further comprising means for communicating via electrically conducting plate(s)/sheets(s)/layer(s) of a building element by providing information to the electrically conducting plate(s)/sheets(s)/layer(s) of the building element and means for receiving, from the electrically conducting plate(s)/sheets(s)/layer(s) of the building element, the information provided.

10. A building according to any of claims 5-9, further comprising means for interconnecting electrically conducting plates/sheets/layers/plates of adjacent building elements.

11. A building according to claim 10, wherein the interconnecting means comprises at least one of:
■ means for transforming a first voltage and/or current carried by one or more of the electrically conducting layers/sheets/plates of one building element into a second voltage and/or current to be carried by one or more of the electrically conducting layers/sheets/plates of an adjacent building element,
■ electrical conductors transferring a voltage and/or current carried by one or more of the electrically conducting layers/sheets/plates of one building element to one or more of the electrically conducting layers/sheets/plates of an adjacent building element,
■ means for galvanically separating the electrically conducting layers/sheets/plates of the two building elements,
■ means for transferring information carried by one or more of the electrically conducting layers/sheets/plates of one building element to one or more of the electrically conducting layers/sheets/plates of an adjacent building element, and
■ fuse means for removing a connection between the electrically conducting layers/sheets/plates of the adjacent building elements when a predetermined situation takes place.

12. An interconnection adapted to be used in the building according to claim 10, the interconnection comprising at least one of:
■ means for transforming a first voltage and/or current carried by one or more of the electrically conducting layers/sheets/plates of one building element into a second voltage and/or current to be carried by one or more of the electrically conducting layers/sheets/plates of an adjacent building element,
■ electrical conductors transferring a voltage and/or current carried by one or more of the electrically conducting layers/sheets/plates of one building element to one or more of the electrically conducting layers/sheets/plates of an adjacent building element,
■ means for galvanically separating the electrically conducting layers/sheets/plates of the two building elements,
■ means for transferring information carried by one or more of the electrically conducting layers/sheets/plates of one building element to one or more of the electrically conducting layers/sheets/plates of an adjacent building element, and
■ fuse means for removing a connection between the electrically conducting layers/sheets/plates of the adjacent building elements when a predetermined situation takes place.

13. A method of providing a building element, the method comprising:
- providing a first and a second, at least substantially parallel, thermally conducting sheets, plates, or layers,
- providing at least one electrically conductive layer, plate, or sheet between the first and second layers/sheets,
- providing a first thermally insulating layer, plate, or sheet between the first sheet/layer/plate and the electrically conducting sheet(s)/layer(s)/plate(s), and
- providing a second thermally insulating layer, plate, or sheet between the second sheet/layer/plate and the electrically conducting sheets(s)/layer(s).

14. A method according to claim 13, wherein the step of providing the at least three sheets/plates/layers comprises providing the sheets/plates/layers so that, along a predetermined direction in a plane of the first sheet/layer/plate, the first and second sheets/layers/plates extend farther than the electrically conducting layer(s)/sheet(s).

15. A method according to claim 14, further comprising the step of providing the electrically conductive sheet(s)/layer(s)/plate(s) in predetermined distance(s) from an outer surface of the first and/or second layers/sheets/plates.

16. A method according to any of claims 13-15, further comprising the step of providing openings in the first and second sheets/plates/layers.

17. A method of providing a building, the method comprising:
- providing an at least substantially rigid skeleton structure,
- providing a plurality of building elements supported by the skeleton structure, each building element comprising:
- a first and a second, at least substantially parallel, thermally conducting sheets, plates, or layers,
- at least one electrically conductive layer, plate, or sheet positioned between the first and second layers/sheets,
- a first thermally insulating layer, plate, or sheet, positioned between the first sheet/layer/plate and the electrically conducting sheet(s)/layer(s)/plate(s),
- a second thermally insulating layer, plate, or sheet, positioned between the second sheet/layer/plate and the electrically conducting sheets(s)/layer(s)/plate(s), and
- providing power to the electrically conducting plate(s)/layer(s)/sheet(s).

18. A method according to claim 17, further comprising electrically connecting the first and/or second plates/layers/sheets to ground or zero.

19. A method according to claim 17 or 18, wherein the step of providing the building elements comprises providing building elements where, along a predetermined direction in a plane of the first sheet/layer/plate, the first and second sheets/layers/plates extend farther than the electrically conducting layer(s)/sheet(s).

20. A method according to claim 17, further comprising the step of accessing, at an outer surface of a building element, the power provided to the conducting plate(s)/layer(s)/sheet(s) of the building element, the accessing step comprising screwing a screw into each of the plate(s)/layer(s)/sheet(s) carrying the power and providing, via the screws, the power carried to or at the surface of the building element.

21. A method element according to any of claims 17-20, further comprising the step of two or more apparatus communicating via electrically conducting plate(s)/sheets(s)/layer(s) of a building element, the communicating step comprises one apparatus providing information to the electrically conducting plate(s)/sheets(s)/layer(s) of the building element and another apparatus receiving, from the electrically conducting plate(s)/sheets(s)/layer(s) of the building element, the information provided.

22. A method according to any of claims 17-21, further comprising the step of interconnecting electrically conducting plates/sheets/layers/plates of adjacent building elements.

23. A method according to claim 22, wherein the interconnecting step further comprises at least one of:
■ transforming a first voltage and/or current carried by one or more of the electrically conducting layers/sheets/plates of one building element into a second voltage and/or current to be carried by one or more of the electrically conducting layers/sheets/plates of an adjacent building element,
■ transferring a voltage and/or current carried by one or more of the electrically conducting layers/sheets/plates of one building element to one or more of the electrically conducting layers/sheets/plates of an adjacent building element,
■ galvanically separating the electrically conducting layers/sheets/plates of the two building elements,
■ transferring information carried by one or more of the electrically conducting layers/sheets/plates of one building element to one or more of the electrically conducting layers/sheets/plates of an adjacent building element, and
■ removing a connection between the electrically conducting layers/sheets/plates of the adjacent building elements when a predetermined situation takes place.

## Patentansprüche

1. Bauelement mit
- einer ersten und einer zweiten, wenigstens im Wesentlichen parallelen, thermisch leitfähigen Schicht, Platte oder Lage,
- wenigstens einer elektrisch leitfähigen Lage, Platte oder Schicht, die zwischen der ersten und der zweiten Lage/Schicht angeordnet ist, und
- einer ersten thermisch isolierenden Lage, Platte oder Schicht, die zwischen der ersten Schicht/Lage/Platte und der (den) elektrisch leitfähigen Schicht(en)/ Lage(n)/ Platte(n) angeordnet ist, und
- einer zweiten thermisch isolierenden Lage, Platte oder Schicht, die zwischen der zweiten Schicht/Lage/Platte und der (den) elektrisch leitfähigen Schicht(en)/Lage(n) angeordnet ist.

2. Bauelement nach Anspruch 1, bei dem entlang einer vorbestimmten Richtung in einer Ebene der ersten Schicht/Lage/Platte die erste und die zweite Schicht/Lage/Platte sich weiter als die elektrisch leitfähige(n) Lage(n)/Schicht(en) erstrecken.

3. Bauelement nach Anspruch 2, bei dem die elektrisch leitfähige(n) Schicht(en)/Lage(n)/Platte(n) in einem vorbestimmten Abstand beziehungsweise in vorbestimmten Abständen von einer äußeren Oberfläche der ersten und/oder zweiten Lagen/Schichten/Platten angeordnet sind.

4. Bauelement nach einem der vorangehenden Ansprüche, das weiterhin in der ersten und in der zweiten Schicht/Platte/Lage Öffnungen aufweist.

5. Gebäude mit einer wenigstens im Wesentlichen steifen Skelettstruktur und einer Anzahl von Bauelementen, die durch die Skelettstruktur gehalten sind, wobei jedes Bauelement aufweist:
- eine erste und eine zweite, wenigstens im Wesentlichen parallele, thermisch leitfähige Schicht, Platte oder Lage,
- wenigstens eine elektrisch leitfähige Lage, Platte oder Schicht, die zwischen der ersten und der zweiten Lage/Schicht angeordnet ist, und
- eine erste thermisch isolierende Lage, Platte oder Schicht, die zwischen der ersten Schicht/Lage/Platte und der (den) elektrisch leitfähigen Schicht(en)/Lage(n)/Platte(n) angeordnet ist, und
- eine zweite thermisch isolierende Lage, Platte oder Schicht, die zwischen der zweiten Schicht/Lage/Platte und der (den) elektrisch leitfähigen Schicht(en)/ Lage(n)/ Platte(n) angeordnet ist,
wobei das Gebäude weiterhin Mittel zum Zuführen von Energie zu der (den) elektrisch leitfähigen Platte(n)/Lage(n)/Schicht(en) aufweist.

6. Gebäude nach Anspruch 5, das weiterhin Mittel zum elektrischen Verbinden der ersten und/oder zweiten Platten/Lagen/Schichten mit Masse oder Null aufweist.

7. Gebäude nach Anspruch 5 oder 6, bei dem entlang einer vorbestimmten Richtung in einer Ebene der ersten Schicht/Lage/Platte die erste und die zweite Schicht/Lage/Platte sich weiter als die elektrisch leitfähige(n) Lage(n)/Schicht(en) erstrecken.

8. Gebäude nach Anspruch 5, das weiterhin an einer äußeren Oberfläche eines Bauelementes Mittel zum Zugriff auf die der (den) elektrisch leitfähigen Platte(n)/Lage(n)/Schicht(en) des Bauelementes zugeführten Energie aufweist, wobei die Zugriffsmittel eine Schraube für jede der Platte(n)/Lage(n)/Schicht(en) aufweist, die Energie führen, wobei die Schraube(n) die dem Bauelement oder der Fläche des Bauelementes zugeführte Energie bereitstellt.

9. Bauelement nach einem der Ansprüche 5-8, das weiterhin Mittel zum Kommunizieren über elektrisch leitfähige Platte(n)/Schicht(en)/Lage(n) eines Bauelementes durch Bereitstellen von Information in die elektrisch leitfähige Platte(n)/Schicht(en)/Lage(n) des Bauelementes aufweist und über Mittel zur Aufnahme der bereitgestellten Information aus der (den) elektrisch leitfähigen Platte(n)/Schicht(en)/Lage(n) des Bauelementes verfügt.

10. Gebäude nach einem der Ansprüche 5-9, das weiterhin Mittel zum Verbinden elektrisch leitfähiger Platten/Schichten/Lagen/Platten von benachbarten Bauelementen aufweist.

11. Gebäude nach Anspruch 10, bei dem die Verbindungsmittel wenigstens eines der folgenden Merkmale aufweisen:
■ Mittel zum Umwandeln einer ersten Spannung und/oder eines ersten Stromes, die beziehungsweise der durch eine oder mehrere der elektrisch leitfähigen Lagen/Schichten/Platten eines Bauelementes geführt ist, in eine zweite Spannung und/oder einen zweiten Strom, die beziehungsweise der durch eine oder mehrere der elektrisch leitfähigen Lagen/Schichten/Platten eines benachbarten Bauelementes geführt ist,
■ elektrisch Leiter, die eine Spannung und/oder einen Strom weiterleiten, die beziehungsweise der durch eine oder mehrere der elektrisch leitfähigen Lagen/Schichten/Platten eines Bauelementes zu einem oder mehreren der elektrisch leitfähigen Lagen/ Schichten/Platten eines benachbarten Bauelementes geführt ist,
■ Mittel zum galvanischen Trennen der elektrisch leitfähigen Lagen/Schichten/Platten der beiden Bauelemente,
■ Mittel zum Weiterleiten von Information, die durch eine oder mehrere der elektrisch leitfähigen Lagen/Schichten/Platten eines Bauelementes zu einer oder mehreren der elektrisch leitfähigen Lagen/Schichten/Platten eines benachbarten Bauelementes geführt ist und
■ Absicherungsmittel zum Entfernen einer Verbindung zwischen den elektrisch leitfähigen Lagen/Schichten/Platten der benachbarten Bauelemente, wenn eine vorbestimmte Situation eintritt.

12. Verbindung, die dazu eingerichtet ist, in dem Gebäude gemäß Anspruch 10 verwendet zu werden, wobei die Verbindung wenigstens eines der folgenden Merkmale aufweist:
■ Mittel zum Umwandeln einer ersten Spannung und/oder eines ersten Stromes, die beziehungsweise der durch eine oder mehrere der elektrisch leitfähigen Lagen/Schichten/Platten eines Bauelementes geführt ist, in eine zweite Spannung und/oder in einen zweiten Strom, der durch eine oder mehrere der elektrisch leitfähigen Lagen/Schichten/Platten eines benachbarten Bauelementes geführt ist,
■ elektrisch Leiter, die eine Spannung und/oder einen Strom weiterleiten, die beziehungsweise der durch eine oder mehrere der elektrisch leitfähigen Lagen/ Schichten/Platten eines Bauelementes zu einem oder mehreren der elektrisch leitfähigen Lagen/ Schichten/Platten eines benachbarten Bauelementes geführt ist,
■ Mittel zum galvanischen Trennen der elektrisch leitfähigen Lagen/Schichten/Platten der beiden Bauelemente,
■ Mittel zum Weiterleiten von Information, die durch eine oder mehrere der elektrisch leitfähigen Lagen/Schichten/Platten eines Bauelementes zu einer oder mehreren der elektrisch leitfähigen Lagen/Schichten/Platten eines benachbarten Bauelementes geführt ist und
■ Absicherungsmittel zum Entfernen einer Verbindung zwischen den elektrisch leitfähigen Lagen/Schichten/Platten der benachbarten Bauelemente, wenn eine vorbestimmte Situation eintritt.

13. Verfahren zum Bereitstellen eines Bauelementes, wobei das Verfahren
- Bereitstellen einer ersten und einer zweiten, wenigstens im Wesentlichen parallelen, thermisch leitfähigen Schicht, Platte oder Lage,
- Bereitstellen wenigstens einer elektrisch leitfähigen Lage, Platte oder Schicht, die zwischen der ersten und der zweiten Lage/Schicht angeordnet ist, und
- Bereitstellen einer ersten thermisch isolierenden Lage, Platte oder Schicht zwischen der ersten Schicht/Lage/Platte und der (den) elektrisch leitfähigen Schicht(en)/Lage(n)/Platte(n) und
- Bereitstellen einer zweiten thermisch isolierenden Lage, Platte oder Schicht zwischen der zweiten Schicht/Lage/Platte und der (den) elektrisch leitfähigen Schicht(en)/Lage(n) umfasst.

14. Verfahren nach Anspruch 13, wobei der Schritt des Bereitstellens der wenigstens drei Schichten/Platten/Lagen ein derartiges Bereitstellen der Schichten/Platten/Lagen aufweist, dass entlang einer vorbestimmten Richtung in einer Ebene der ersten Schicht/Lage/Platte die erste und die zweite Schicht/Lage/Platte sich weiter als die elektrisch leitfähige(n) Lage(n)/Schicht(en) erstrecken.

15. Verfahren nach Anspruch 14, das weiterhin den Schritt des Bereitstellens der elektrisch leitfähigen Schicht(en)/Lage(n)/Platte(n) in einem vorbestimmten Abstand beziehungsweise in vorbestimmten Abständen von einer äußeren Oberfläche der ersten und/oder zweiten Lagen/Schichten/Platten aufweist.

16. Verfahren nach einem der Ansprüche 13-15, das weiterhin den Schritt des Bereitstellens von Öffnungen in der ersten und in zweiten Schichten/Platten/Lagen aufweist.

17. Verfahren zum Bereitstellen eines Gebäudes, wobei das Verfahren
- Bereitstellen einer wenigstens im Wesentlichen steifen Skelettstruktur,
- Bereitstellen einer Anzahl von Bauelementen, die durch die Skelettstruktur gehalten sind,
wobei jedes Bauelement
- eine erste und eine zweite, wenigstens im Wesentlichen parallele, thermisch leitfähige Schicht, Platte oder Lage,
- wenigstens eine elektrisch leitfähige Lage, Platte oder Schicht, die zwischen der ersten und der zweiten Lage/Schicht angeordnet ist, und
- eine erste thermisch isolierende Lage, Platte oder Schicht, die zwischen der ersten Schicht/Lage/Platte und der elektrisch leitfähigen Schicht(en)/Lage(n)/Platte(n) angeordnet ist,
- eine zweite thermisch isolierende Lage, Platte oder Schicht, die zwischen der zweiten Schicht/Lage/Platte und der elektrisch leitfähigen Schicht(en)/Lage(n)/Platte(n) angeordnet ist, aufweist und
- Zuführen von Energie zu der beziehungsweise den elektrisch leitfähigen Platte(n)/Lage(n)/Schicht(en) umfasst.

18. Verfahren nach Anspruch 17, das weiterhin elektrisches Verbinden der ersten und/oder zweiten Platten/Lagen/Schichten mit Masse oder Null aufweist.

19. Verfahren nach Anspruch 17 oder 18, bei dem weiterhin der Schritt des Bereitstellens der Bauelemente das Bereitstellen von Bauelementen aufweist, bei denen entlang einer vorbestimmten Richtung in einer Ebene der ersten Schicht/Lage/Platte die erste und die zweite Schicht/Lage/Platte sich weiter als die elektrisch leitfähige(n) Lage(n)/Schicht(en) erstrecken.

20. Verfahren nach Anspruch 17, das weiterhin den Schritt des Zugriffs auf die der (den) elektrisch leitfähigen Platte(n)/Lage(n)/Schicht(en) des Bauelementes zugeführte Energie aufweist, wobei der Zugriffsschritt das Einschrauben einer Schraube in jede der Platte(n)/Lage(n)/Schicht(en) aufweist, die Energie führen, wobei die Energie über die Schrauben zu dem Bauelement oder der Fläche des Bauelementes geführt wird.

21. Verfahren nach einem der Ansprüche 17-20, das weiterhin den Schritt des Kommunizierens von zwei oder mehr Vorrichtungen über elektrisch leitfähige Plate(n)/Schicht(en)/Lage(n) eines Bauelementes aufweist, wobei der Kommunikationsschritt das Bereitstellen von Information in die elektrisch leitfähige Platte(n)/Schicht(en)/Lage(n) des Bauelementes über eine Vorrichtung und das Aufnehmen der bereitgestellten Information aus der (den) elektrisch leitfähigen Platte(n)/Schicht(en)/Lage(n) des Bauelementes über eine weitere Vorrichtung aufweist.

22. Verfahren nach einem der Ansprüche 17-21, das weiterhin den Schritt des Verbindens elektrisch leitfähiger Platten/Schichten/Lagen/Platten von benachbarten Bauelementen aufweist.

23. Verfahren nach Anspruch 22, bei dem der Verbindungsschritt weiterhin einen der folgenden Schritte aufweist:
■ Umwandeln einer ersten Spannung und/oder eines ersten Stromes, die beziehungsweise der durch eine oder mehrere der elektrisch leitfähigen Lagen/Schichten/Platten eines Bauelementes geführt ist, in eine zweite Spannung und/oder in einen zweiten Strom, die beziehungsweise der durch eine oder mehrere der elektrisch leitfähigen Lagen/Schichten/Platten eines benachbarten Bauelementes geführt ist,
■ elektrisch Leiter, die eine Spannung und/oder einen Strom weiterleiten, die beziehungsweise der durch eine oder mehrere der elektrisch leitfähigen Lagen/Schichten/Platten eines Bauelementes zu einem oder mehreren der elektrisch leitfähigen Lagen/Schichten/Platten eines benachbarten Bauelementes geführt ist,
■ galvanisches Trennen der elektrisch leitfähigen Lagen/Schichten/Platten der beiden Bauelemente,
■ Weiterleiten von Information, die durch eine oder mehrere der elektrisch leitfähigen Lagen/Schichten/Platten eines Bauelementes zu einer oder mehreren der elektrisch leitfähigen Lagen/Schichten/Platten eines benachbarten Bauelementes geführt ist und
■ Entfernen einer Verbindung zwischen den elektrisch leitfähigen Lagen/Schichten/Platten der benachbarten Bauelemente, wenn eine vorbestimmte Situation eintritt.

## Revendications

1. Elément de construction comprenant :
- une première et une seconde feuilles, plaques ou couches thermoconductrices, au moins sensiblement parallèles,
- au moins une couche, plaque ou feuille électroconductrice positionnée entre la première et la seconde couche/feuille, et
- une première couche, plaque ou feuille thermo-isolante, positionnée entre la première feuille/couche/plaque et la/les feuille(s)/couche(s)/plaque(s) électroconductrices, et
- une seconde couche, plaque ou feuille thermo-isolante, positionnée entre la seconde feuille/couche/plaque et la/les feuille(s)/couche(s) électroconductrice(s).

2. Elément de construction selon la revendication 1, dans lequel les première et seconde feuilles/couches/plaques s'étendent au-delà de la/les couche(s)/feuille(s) électroconductrice(s) selon une direction prédéfinie dans un plan de la première feuille/couche/plaque.

3. Elément de construction selon la revendication 2, dans lequel la/les feuille(s)/couche(s)/plaque(s) électroconductrice(s) sont prévues à une/des distance(s) prédéfinie(s) d'une surface extérieure des première et/ou seconde couches/feuilles/plaques.

4. Elément de construction selon une des revendications précédentes, comprenant en outre des ouvertures dans les première et seconde feuilles/couches/plaques.

5. Construction comprenant au moins une structure d'ossature rigide et une pluralité d'éléments de construction soutenus par la structure d'ossature, chaque élément de construction comprenant :
- une première et une seconde feuilles, plaques ou couches thermoconductrices, au moins sensiblement parallèles,
- au moins une couche, plaque ou feuille électroconductrice positionnée entre la première et la seconde couche/feuille,
- une première couche, plaque ou feuille thermo-isolante, positionnée entre la première feuille/couche/plaque et la/les feuille(s)/couche(s)/plaque(s) électroconductrice(s), et
- une seconde couche, plaque ou feuille thermo-isolante, positionnée entre la seconde feuille/couche/plaque et la/les feuille(s)/couche(s) électroconductrice(s),
la construction comprenant en outre un moyen pour amener de l'énergie aux plaque(s)/couche(s)/feuille(s) électroconductrices.

6. Construction selon la revendication 5, comprenant en outre un moyen de connexion électrique des première et/ou seconde plaques/couches/feuilles à la terre ou au neutre.

7. Construction selon la revendication 5 ou 6, dans lequel les première et seconde feuilles/couches/plaques s'étendent au-delà de la/les couche(s)/feuille(s) électroconductrice(s) selon une direction prédéfinie dans un plan de la première feuille/couche/plaque.

8. Construction selon la revendication 5, comprenant en outre un moyen d'accès, au niveau d'une surface extérieure d'un élément de construction, à l'énergie amenée à/aux plaque(s)/couche(s)/feuille(s) conductrice(s) de l'élément de construction, le moyen d'accès comprenant une vis pour chacune des plaque(s)/couche(s)/feuille(s) portant l'énergie, la/les vis amenant l'énergie portée à ou au niveau de la surface de l'élément de construction.

9. Construction selon une des revendications 5 à 8, comprenant en outre un moyen de communication via les plaque(s)/feuille(s)/couche(s) électroconductrice(s) d'un élément de construction, en amenant des informations à la/aux plaque(s)/feuille(s)/couche(s) électroconductrice(s) de l'élément de construction, et un moyen de réception des informations amenées provenant de la/des plaque(s)/feuille(s)/couche(s) électroconductrice(s) de l'élément de construction.

10. Construction selon une des revendications 5 à 9, comprenant en outre un moyen d'interconnexion entre les plaques/feuilles/couches électroconductrices d'éléments de construction adjacents.

11. Construction selon la revendication 10, dans lequel le moyen d'interconnexion comprend au moins :
■ un moyen pour transformer une première tension et/ou un premier courant portés par une ou plus d'une des couches/feuilles/plaques électroconductrices d'un élément de construction en une seconde tension et/ou un second courant destinés à être portés par une ou plusieurs des couches/feuilles/plaques électroconductrices d'un élément de construction adjacent,
■ des conducteurs électriques transférant une tension et/ou un courant portés par une ou plusieurs des couches/feuilles/plaques électroconductrices d'un élément de construction à une ou plusieurs des couches/feuilles/plaques électroconductrices d'un élément de construction adjacent,
■ un moyen de séparation galvanique des couches/feuilles/plaques électroconductrices des deux éléments de construction,
■ un moyen de transfert d'informations portées par une ou plusieurs couches/feuilles/plaques électroconductrices d'un élément de construction à une ou plusieurs des couches/feuilles/plaques électroconductrices d'un élément de construction adjacent, et
■ un moyen fusible pour supprimer une connexion entre les couches/feuilles/plaques électroconductrices des éléments de construction adjacents lorsqu'une situation prédéfinie survient.

12. Interconnexion adaptée pour être utilisée dans la construction selon la revendication 10, l'interconnexion comprenant au moins :
■ un moyen pour transformer une première tension et/ou un premier courant portés par une ou plus d'une des couches/feuilles/plaques électroconductrices d'un élément de construction en une seconde tension et/ou un second courant destinés à être portés par une ou plusieurs des couches/feuilles/plaques électroconductrices d'un élément de construction adjacent,
■ des conducteurs électriques transférant une tension et/ou un courant portés par une ou plusieurs des couches/feuilles/plaques électroconductrices d'un élément de construction à une ou plusieurs des couches/feuilles/plaques électroconductrices d'un élément de construction adjacent,
■ un moyen de séparation galvanique des couches/feuilles/plaques électroconductrices des deux éléments de construction,
■ un moyen de transfert d'informations portées par une ou plusieurs couches/feuilles/plaques électroconductrices d'un élément de construction à une ou plusieurs des couches/feuilles/plaques électroconductrices d'un élément de construction adjacent, et
■ un moyen fusible pour supprimer une connexion entre les couches/feuilles/plaques électroconductrices des éléments de construction adjacents lorsqu'une situation prédéfinie survient.

13. Procédé consistant à prévoir un élément de construction, le procédé comprenant les étapes suivantes :
- prévoir une première et une seconde feuilles, plaques ou couches thermoconductrices, au moins sensiblement parallèles,
- prévoir au moins une couche, plaque ou feuille électroconductrice positionnée entre la première et la seconde couche/feuille,
- prévoir une première couche, plaque ou feuille thermo-isolante, positionnée entre la première feuille/couche/plaque et la/les feuille(s)/couche(s)/plaque(s) électroconductrices, et
- prévoir une seconde couche, plaque ou feuille thermo-isolante, positionnée entre la seconde feuille/couche/plaque et la/les feuille(s)/couche(s) électroconductrices.

14. Procédé selon la revendication 13, dans lequel l'étape consistant à prévoir les au moins trois feuilles/plaques/couches consiste à prévoir les feuilles/plaques/couches de telle manière que les première et seconde feuilles/couches/plaques s'étendent au-delà de la/les couche(s)/feuille(s) électroconductrice(s) selon une direction prédéfinie dans un plan de la première feuille/couche/plaque.

15. Procédé selon la revendication 14, comprenant en outre l'étape qui consiste à prévoir la/les feuille(s)/couche(s)/plaque(s) électroconductrice(s) à une/des distance(s) prédéfinie(s) d'une surface extérieure des premières et/ou secondes couches/feuilles/plaques.

16. Procédé selon une des revendications 13 à 15, comprenant en outre l'étape qui consiste à prévoir des ouvertures dans les première et seconde feuilles/plaques/couches.

17. Procédé consistant à prévoir un élément de construction, le procédé comprenant les étapes suivantes :
- prévoir une structure d'ossature au moins sensiblement rigide,
- prévoir une pluralité d'éléments de construction soutenus par la structure d'ossature, chaque élément de construction comprenant :
- une première et une seconde feuilles, plaques ou couches thermoconductrices, au moins sensiblement parallèles,
- au moins une couche, plaque ou feuille électroconductrice positionnée entre la première et la seconde couche/feuille,
- une première couche, plaque ou feuille thermo-isolante, positionnée entre la première feuille/couche/plaque et la/les feuille(s)/couche(s)/plaque(s) électroconductrices,
- une seconde couche, plaque ou feuille thermo-isolante, positionnée entre la seconde feuille/couche/plaque et la/les feuille(s)/couche(s) électroconductrices, et
- amener de l'énergie à la/aux plaque(s)/couche(s)/feuille(s) électroconductrice(s).

18. Procédé selon la revendication 17, consistant en outre à connecter les première et/ou seconde plaques/couches/feuilles à la terre ou au neutre.

19. Procédé selon la revendication 17 ou 18, dans lequel l'étape consistant à prévoir l'élément de construction consiste à prévoir des éléments de construction pour lesquels les première et seconde feuilles/couches/plaques s'étendent au-delà de la/les couche(s)/feuille(s) électroconductrice(s) selon une direction prédéfinie dans un plan de la première feuille/couche/plaque.

20. Procédé selon la revendication 17, comprenant en outre l'étape qui consiste à accéder, au niveau d'une surface extérieure d'un élément de construction, à l'énergie amenée à/aux plaque(s)/couches)/feuille(s) de l'élément de construction, l'étape d'accès consistant à visser une vis dans une/chacune des plaque(s)/couche(s)/feuille(s) portant l'énergie et à amener, via les vis, l'énergie à ou au niveau de la surface de l'élément de construction.

21. Procédé selon une des revendications 17 à 20, comprenant l'étape qui consiste à mettre en communication deux ou plus de deux appareils via la/les plaque(s)/feuille(s)/couche(s) électroconductrice(s) d'un élément de construction, l'étape de mise en communication consistant en ce qu'un appareil amène les informations à la/aux plaque(s)/feuille(s)/couche(s) électroconductrice(s) de l'élément de construction, et en ce qu'un autre appareil reçoivent les informations amenées provenant de la/des plaque(s)/feuille(s)/couche(s) électroconductrice(s) de l'élément de construction.

22. Procédé selon une des revendications 17 à 21, comprenant en outre l'étape qui consiste à interconnecter les plaques/feuilles/couches/plaques électroconductrices d'éléments de construction adjacents.

23. Procédé selon la revendication 22, dans lequel l'étape d'interconnexion consiste au moins à :
■ transformer une première tension et/ou un premier courant portés par une ou plus d'une des couches/feuilles/plaques électroconductrices d'un élément de construction en une seconde tension et/ou un second courant destinés à être portés par une ou plusieurs des couches/feuilles/plaques électroconductrices d'un élément de construction adjacent,
■ transférer une tension et/ou un courant portés par une ou plusieurs des couches/feuilles/plaques électroconductrices d'un élément de construction à une ou plusieurs des couches/feuilles/plaques électroconductrices d'un élément de construction adjacent,
■ effectuer une séparation galvanique des couches/feuilles/plaques électroconductrices des deux éléments de construction,
■ transférer des informations portées par une ou plusieurs couches/feuilles/plaques électroconductrices d'un élément de construction à une ou plusieurs des couches/feuilles/plaques électroconductrices d'un élément de construction adjacent, et
■ supprimer une connexion entre les couches/feuilles/plaques électroconductrices des éléments de construction adjacents.
